# FASCICULE DE BREVET EUROPEEN

(11) **EP 3 635 989 B1**
(45) Date de publication et mention de la délivrance du brevet: **03.11.2021**
(21) Numéro de dépôt: 18742839.6
(22) Date de dépôt: 06.06.2018
(51) Int. Cl.: H04W 12/08, H04L 12/66, H04W 84/12, H04W 88/16, H04W 4/38

(54) **TRANSMISSION DE DONNÉES ENTRE UN TERMINAL ET UN SERVEUR ASSOCIÉ**
DATENÜBERTRAGUNG ZWISCHEN EINEM ENDGERÄT UND EINEM ZUGEHÖRIGEN SERVER
DATA TRANSMISSION BETWEEN A TERMINAL AND AN ASSOCIATED SERVER

(30) Priorité: 07.06.2017 FR 1755063
(43) Date de publication de la demande: 15.04.2020
(73) Titulaire: ORANGE, 92130 Issy-les-Moulineaux (FR)
(72) Inventeur: LAMPIN, Quentin, 92326 Ch tillon Cedex (FR); BARTHEL, Dominique, 92326 Ch tillon Cedex (FR)
(86) Numéro de dépôt international: PCT/FR2018/000160
(87) Numéro de publication internationale: WO 2018/224740

(56) Documents cités:
- EP-A1- 2 533 466
- WO-A1-2017/082955
- US-A1- 2016 072 806
- Anonymous: "Getting started with LoraWAN, TheThingsNetwork and PlatformIO", ThingForward, 27 septembre 2017 (2017-09-27), XP055447807, Extrait de l'Internet: URL:https://www.thingforward.io/techblog/2 017-09-27-getting-started-with-lorawan-the thingsnetwork-and-platformio.html [extrait le 2018-02-05]

## Description

L'invention se situe dans le domaine des télécommunications.

L'invention concerne plus particulièrement un système de communication dans lequel un terminal communique avec un serveur d'application apte à fournir des services applicatifs à ce terminal par l'intermédiaire d'un réseau de télécommunications, et plus particulièrement d'un serveur de ce réseau. Aucune limitation n'est attachée à la nature du terminal ni à la nature des services applicatifs fournis. Le terminal peut être un terminal fixe ou mobile, tel qu'un compteur électrique, un capteur...Le serveur d'application peut être opéré par un fournisseur de services quelconque, comme par exemple un fournisseur d'électricité, d'eau...

L'invention a aussi une application privilégiée mais non limitative dans le contexte de l'Internet des Objets, et notamment des architectures ou réseaux étendus de type LoRaWAN™ (pour « Long Range Wide Area Network). De façon connue, le protocole en cours de standardisation LoRaWAN™ permet une communication radio à bas débit (inférieur à 50 kbit/s) et à faible consommation d'énergie, d'objets communiquant selon la technologie LoRa™ (pour « Long range »), et connectés à internet via un réseau de communication.

Dans une architecture de type LoRaWAN™, chaque terminal est amené à communiquer avec un serveur applicatif via un réseau de télécommunications. Plus particulièrement, les données émises par chaque terminal, via une liaison radio, sont reçues par une pluralité de passerelles ou stations de base qui les relaient vers un serveur du réseau, via une connexion filaire ou cellulaire. Ce serveur du réseau filtre les messages reçus des terminaux (et vérifie notamment leur provenance et leur intégrité), et les retransmet aux serveurs applicatifs concernés.

Malgré une technologie radio optimisée pour une longue portée, de nombreux capteurs conçus pour fonctionner selon la technologie LoRa™ ne parviennent pas à communiquer avec les passerelles du réseau Lora™ désiré car les signaux émis par ces capteurs ne parviennent pas jusqu'aux passerelles. Ces capteurs sont par exemple positionnés dans des zones telles que des sous-sols, des caves, des bâtiments en tôle...

De façon connue, des passerelles additionnelles peuvent être ajoutées au réseau Lora™ pour permettre à ces capteurs de communiquer avec ce réseau.

Cependant, ces passerelles sont coûteuses. De plus, elles requièrent un raccordement secteur et une connexion cellulaire ou filaire.

Un des buts de l'invention est de remédier à des insuffisances/inconvénients de l'état de la technique et/ou d'y apporter des améliorations.

A cette fin, l'invention se rapporte à un dispositif de transmission apte à communiquer via une liaison radio avec un équipement passerelle formant nœud d'un réseau de télécommunication et configuré pour communiquer avec un serveur de gestion via ledit équipement passerelle et un serveur réseau dudit réseau.

Selon l'invention, le dispositif de transmission comporte :
un module d'obtention configuré pour obtenir des premières données d'authentification associées à au moins un identifiant de terminal, un dit identifiant de terminal identifiant un terminal configuré pour se connecter via ledit serveur de réseau à un serveur applicatif ;
un module d'authentification configuré pour établir une session de communication entre ledit dispositif de transmission et ledit terminal à l'aide d'au moins une des premières données d'authentification obtenues ;
un module d'émission configuré pour émettre des données d'établissement de ladite session, lesdites données étant destinées audit serveur de gestion, ledit serveur de gestion étant apte à commander, suite à la réception desdites données, un enregistrement d'informations relatives à la session établie en association avec l'identifiant du terminal dans une mémoire accessible par le serveur de réseau ;
un module de réception configuré pour recevoir un message de données émis par ledit terminal et destiné audit serveur applicatif et pour recevoir un message de données généré par le serveur applicatif ou le serveur de réseau et destiné au terminal ; et
un module de transfert configuré pour émettre ledit message de données reçu.

Corrélativement, l'invention se rapporte également à un procédé de transmission tel que décrit précédemment.

Selon l'invention, le procédé comporte les étapes suivantes :
obtention de premières données d'authentification associées à au moins un identifiant de terminal, un dit identifiant de terminal identifiant un terminal configuré pour se connecter à un serveur applicatif via ledit serveur de réseau ;
établissement d'une session de communication entre le dispositif de transmission et le terminal à l'aide d'au moins une des premières données d'authentification obtenues ;
émission de données d'établissement de ladite session, lesdites données étant destinées audit serveur de gestion, ledit serveur de gestion étant apte à commander, suite à la réception desdites données d'établissement de session, un enregistrement d'informations relatives à la session établie en association avec l'identifiant du terminal dans une mémoire accessible par le serveur de réseau ;
réception d'un message de données émis par le terminal et destiné audit serveur applicatif et/ou d'un message de données généré par le serveur applicatif ou le serveur de réseau et destiné au terminal ; et
émission dudit message de données reçu.

Un dispositif de transmission, appelé également dispositif répéteur, est positionné dans la zone de couverture radio d'un terminal pour permettre à ce terminal d'accéder au réseau et de communiquer avec un serveur applicatif. Grâce à ce dispositif de transmission, un terminal configuré pour se connecter au réseau mais ne pouvant accéder directement via une liaison radio à un équipement passerelle du réseau, peut communiquer avec un serveur applicatif.

Le réseau est par exemple un réseau LoRa™.

Le dispositif de transmission se comporte vis-à-vis du réseau comme un terminal. Ainsi, il communique avec un équipement passerelle via des signaux radios, par exemple des signaux radio longue portée. L'équipement passerelle relaie les informations venant du dispositif de transmission vers un serveur de gestion via un ou plusieurs serveurs du réseau. Réciproquement, les informations provenant du serveur de gestion et destinées au dispositif de transmission sont transmises à ce dispositif via le ou les serveurs de réseau et via l'équipement passerelle.

Avantageusement, les liaisons de communications entre les différents serveurs et entre un serveur du réseau et un équipement passerelle sont des liaisons filaires ou cellulaires classiques.

Cependant, aucune limitation n'est apportée au type de ces liaisons.

Avantageusement, la liaison entre le dispositif et le terminal est une liaison radio longue portée selon la technologie LoRa. Ainsi, les terminaux configurés pour respecter le protocole LoRaWAN™ peuvent accéder via un réseau LoRa à des serveurs applicatifs sans qu'il soit nécessaire de les adapter.

Cependant, la liaison entre le dispositif et le terminal peut être une liaison radio ayant des caractéristiques différentes, par exemple une liaison radio courte portée.

Dans un mode de réalisation, une session de communication est établie entre le dispositif de transmission et un serveur de gestion, qui représente un serveur applicatif associé au dispositif de transmission.

Cet établissement de session peut comporter une authentification mutuelle entre le dispositif de transmission et le serveur de gestion et/ou être basé sur des secrets partagés, typiquement une clé.

Cette session est par exemple établie suite à l'émission par le dispositif de transmission d'une requête de connexion à un serveur de gestion via le réseau.

Le dispositif de transmission agit comme mandataire pour le réseau et répond aux requêtes de connexion au réseau provenant des terminaux pour lesquels il a reçu des droits. Ces droits se présentent par exemple sous la forme de données d'authentification. Grâce aux droits acquis, le dispositif de transmission peut établir une session de communication avec ce terminal à la place d'un serveur de réseau et/ou d'un serveur applicatif.

Le dispositif de transmission transmet également au serveur de gestion, des données d'établissement de session. Ces données sont des données utilisées pour établir la session de communication entre le terminal et le dispositif de transmission. Comme expliqué ultérieurement, ces données sont des données générées par le terminal et communiquées par celui-ci au dispositif de transmission ou des données générées par le dispositif de transmission.

Le serveur de gestion interprète la réception de ces données comme une preuve de la connexion du terminal au réseau. Il informe alors le serveur réseau de cette connexion en lui communiquant des informations relatives à cette connexion. Ces informations sont enregistrées dans une mémoire accessible par le serveur réseau. Ainsi, le serveur de réseau ne rejettera pas les messages destinés au serveur applicatif émis par ce terminal.

Les données d'établissement de session peuvent également être transmises au serveur applicatif par le serveur de gestion.

Suite à la mise à disposition par le serveur de gestion, des données de session d'établissement, le serveur réseau et le serveur applicatif disposent des mêmes informations que celles qui auraient été obtenues par le serveur réseau et le serveur applicatif dans le cas d'une connexion directe d'un terminal avec une passerelle, c'est-à-dire dans le cas d'un terminal se trouvant dans la zone de couverture d'un équipement passerelle.

Avantageusement, les informations de connexion enregistrées contiennent la ou les clés de session générée pour cette connexion. Le serveur réseau peut, grâce à cette clé de session, authentifier, chiffrer et déchiffrer les messages de données en provenance ou à destination du terminal et retransmis dans chaque sens par le dispositif de transmission.

Après cette phase de connexion, le dispositif de transmission retransmet via le réseau à destination du serveur applicatif, les messages destinés à ce serveur applicatif et émis par le terminal. De manière symétrique, le dispositif de transmission retransmet au terminal les messages destinés à ce terminal et transmis via le réseau par le serveur applicatif. De manière équivalente, le dispositif de transmission retransmet au serveur réseau, les messages destinés à ce serveur réseau et émis par le terminal, ainsi que les messages en provenance du serveur réseau à destination du terminal.

Ce dispositif de transmission permet ainsi au terminal de communiquer avec le réseau et le serveur applicatif auquel il est rattaché. Il joue ainsi le rôle de relais.

Aucune modification n'est nécessaire au niveau du terminal.

Le dispositif de transmission est peu onéreux. Il n'est pas nécessaire qu'il comporte un module de connexion filaire ou cellulaire. Il communique d'une part avec un ou plusieurs terminaux et d'autre part avec une passerelle de réseau via une liaison radio. Ce moyen de communication est peu consommateur en énergie pour le dispositif de transmission. Ainsi, il n'est pas nécessaire de raccorder le dispositif de transmission à une prise de courant électrique. Une batterie ou des piles sont suffisantes pour l'alimenter. Ceci facilite son installation.

Selon un mode de réalisation particulier du procédé de communication, l'étape d'obtention est une étape de réception des premières données d'authentification, lesdites premières données étant transmises par le serveur de gestion.

L'envoi des premières données par le serveur de gestion permet une configuration souple. Ceci permet notamment au serveur de gestion de demander au dispositif de transmission de retransmettre les messages émis par un terminal supplémentaire ou au contraire de lui demander d'arrêter de transmettre les messages émis par un terminal. Ceci permet une gestion plus simple d'un parc de terminaux.

Le retrait d'un terminal permet également d'améliorer la sécurité dans le cas où il serait constaté que le terminal est un terminal frauduleux.

Selon une caractéristique particulière du procédé de communication, les premières données d'authentification sont obtenues en réponse à un message émis par ledit dispositif de transmission.

Ce mode de réalisation est particulièrement adapté au cas où un serveur du réseau ne peut pas interroger directement les terminaux connectés au réseau, et plus particulièrement ici le dispositif de transmission. Dans ce mode de réalisation, le dispositif de transmission émet périodiquement des messages destinés au serveur réseau. Le serveur réseau peut alors communiquer des informations au dispositif de transmission en répondant à un tel message.

Selon un mode de réalisation particulier du procédé de communication, l'étape d'établissement de ladite session comporte :
une étape de réception d'une requête de connexion audit serveur applicatif émise par ledit terminal, ladite requête contenant des deuxièmes données d'authentification ; et
une étape d'émission, en réponse à la dite requête de connexion, d'un message d'acceptation de connexion audit serveur applicatif comprenant des troisièmes données d'authentification, lesdites troisièmes données comprenant au moins une des premières données d'authentification et/ou des données générées par le dispositif de transmission.

Selon un mode de réalisation particulier du procédé de communication, les premières données d'authentification comportent une clé principale, les deuxièmes données d'authentification comportent une première valeur aléatoire et les troisièmes données comportent une deuxième valeur aléatoire et le procédé comporte une étape de génération d'une clé secondaire par application d'une fonction prédéfinie à ladite clé principale, à la première valeur aléatoire et à la deuxième valeur aléatoire.

Une clé de session secondaire est une clé dérivée de la clé principale. Cette clé est calculée par le dispositif de transmission à partir de données générées par le terminal et de données à disposition du dispositif de transmission.

Des données, appelées troisièmes données, sont transmises au terminal de façon à ce qu'il calcule la même clé secondaire.

La génération d'une même clé d'une part par le terminal et d'autre part par le dispositif de transmission permet une authentification mutuelle des deux équipements.

Selon un mode de réalisation particulier du procédé de communication, les données d'établissement de session transmises comportent ladite clé secondaire.

La clé secondaire est nécessaire au serveur applicatif pour déchiffrer les messages émis par le terminal. La transmission de cette clé secondaire calculée par le dispositif de transmission permet au serveur applicatif de pouvoir déchiffrer les messages générés par le terminal.

Selon un mode de réalisation particulier du procédé de communication, la deuxième valeur aléatoire est générée par le dispositif de transmission.

La génération de la deuxième valeur aléatoire par le dispositif de transmission permet de renforcer la sécurité lors de la phase d'authentification mutuelle du terminal et du dispositif de transmission.

Selon un mode de réalisation particulier du procédé de communication, les troisièmes données comportent une adresse du terminal générée ou reçue par le dispositif de transmission.

Ce mode de réalisation est particulièrement adapté aux architectures dans lesquelles les adresses des équipements ne sont pas fixes et varient régulièrement, par exemple à chaque session.

L'adresse du terminal est générée par le dispositif de transmission ou par le serveur de gestion ou encore un serveur du réseau et transmise par le serveur de gestion et/ou le serveur réseau au dispositif de transmission.

A titre d'alternative, elle peut être préenregistrée dans le dispositif de transmission.

L'invention se rapporte également à un serveur de gestion apte à communiquer avec un dispositif de transmission via un équipement passerelle formant nœud d'un réseau de télécommunication et un serveur réseau d'un réseau de télécommunication, le dispositif de transmission étant apte à communiquer via une liaison radio avec l'équipement passerelle formant nœud d'un réseau de télécommunication.

Le serveur de gestion comporte :
un module de réception configuré pour recevoir des données d'établissement d'une session de communication établie entre le dispositif de transmission et un terminal configuré pour se connecter, via le serveur réseau, à un serveur applicatif, ladite session de communication étant établie à l'aide d'au moins une de premières données d'authentification obtenues par le dispositif de transmission, les premières données d'authentification étant associées à au moins un identifiant du terminal; et
un module de traitement apte à commander, suite à la réception desdites données d'établissement de session, un enregistrement d'informations relatives à la session établie en association avec l'identifiant du terminal dans une mémoire accessible par le serveur de réseau.

L'invention se rapporte aussi à un procédé de gestion mis en œuvre par un serveur de gestion tel que décrit précédemment.

Le procédé de gestion comporte les étapes suivantes :
réception de données d'établissement d'une session de communication établie entre le dispositif de transmission et un terminal configuré pour se connecter, via le serveur réseau, à un serveur applicatif, ladite session de communication étant établie à l'aide d'au moins une de premières données d'authentification obtenues par le dispositif de transmission, les premières données d'authentification (KP1) étant associées à au moins un identifiant du terminal (IdC) ; et
commande d'un enregistrement, suite à la réception desdites données d'établissement de session, d'informations relatives à la session établie en association avec l'identifiant du terminal dans une mémoire accessible par le serveur de réseau.

L'invention se rapporte encore à un système comprenant un serveur réseau, un serveur applicatif, au moins un terminal configuré pour se connecter, via le serveur réseau, à un serveur applicatif, un serveur de gestion tel que décrit précédemment et un dispositif de transmission tel que décrit précédemment.

L'invention se rapporte également à un produit programme d'ordinateur comprenant des instructions pour la mise en œuvre d'un procédé de transmission ou d'un procédé de gestion tel que décrit précédemment, lorsque ce programme est exécuté par un processeur.

L'invention concerne ainsi un logiciel ou programme, susceptible d'être exécuté par un ordinateur ou par un processeur de données, ce logiciel / programme comportant des instructions pour commander l'exécution des étapes d'un procédé de transmission ou d'un procédé de gestion. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en œuvre par une ou plusieurs machines physiquement distinctes et présente globalement l'architecture d'un ordinateur, incluant des constituants d'une telle architecture : mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante de modes de réalisation donnés à titre d'exemple non limitatif, en référence aux dessins annexés, dans lesquels :
- la figure 1 est un schéma illustrant un système selon un mode de réalisation particulier de l'invention ;
- la figure 2 est un schéma représentant un dispositif de transmission apte à mettre en œuvre un procédé de transmission selon un mode de réalisation de l'invention ;
- la figure 3 est un schéma représentant un serveur de gestion apte à mettre en œuvre un procédé de gestion selon un mode de réalisation de l'invention ;
- la figure 4 est un organigramme illustrant les différentes étapes d'un procédé de transmission et d'un procédé de gestion selon un mode de réalisation particulier de l'invention.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

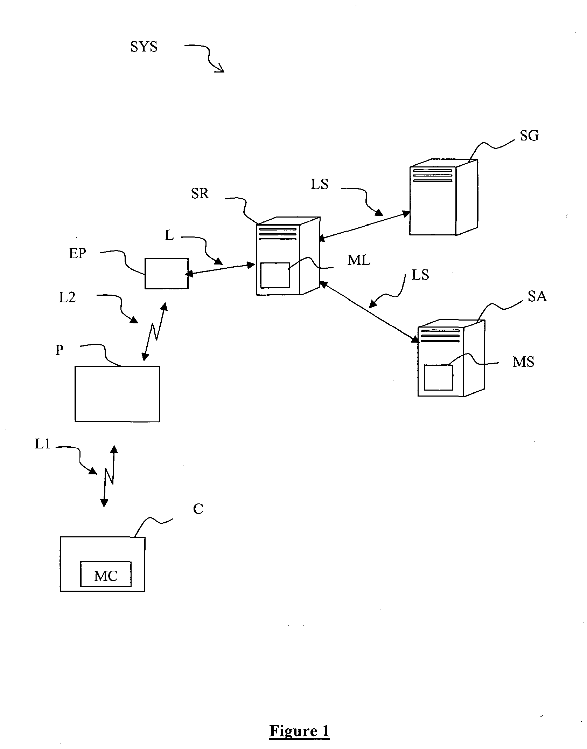

Un mode de réalisation d'un procédé de transmission et d'un procédé de gestion va maintenant être décrit en référence aux figures 1 à 4.

La **figure 1** représente un système de communication SYS conforme à l'invention, dans un mode particulier de réalisation.

Dans l'exemple envisagé à la figure 1, le système de communication SYS s'appuie sur un réseau de télécommunications étendu mettant en œuvre le protocole LoRaWAN™. De façon connue, le protocole LoRaWAN™ est particulièrement bien adapté dans le contexte de l'Internet des Objets pour permettre à divers objets communicants d'échanger avec des serveurs sur Internet.

Aucune limitation n'est attachée à la nature des objets communicants. Il peut s'agir de terminaux divers tels que des capteurs, des actionneurs, ou tout autre type d'objet. De façon connue, de tels objets, par leurs contraintes matérielles et/ou logicielles, ne peuvent pas se connecter par des réseaux d'accès classiques tels que Wifi, cellulaire ou filaire au réseau Internet pour accéder aux services applicatifs auxquels ils sont rattachés : ils communiquent avec ces services par l'intermédiaire d'un réseau de télécommunications adapté à leurs contraintes, tel que LoRaWAN™, selon une topologie en étoile.

Le système de communication SYS comprend au moins un dispositif de transmission P, au moins un terminal C, au moins un équipement passerelle EP, un serveur de réseau SR, un serveur de gestion SG et au moins un serveur applicatif SA.

Aucune limitation n'est attachée au nombre de serveurs applicatifs, au nombre de dispositifs de transmission, au nombre d'équipements passerelle ou au nombre de terminaux.

Le serveur réseau SR est apte à communiquer avec le serveur de gestion SG et le serveur applicatif SA via une liaison LS.

La liaison LS est par exemple une liaison filaire.

La liaison LS est de préférence sécurisée.

L'équipement passerelle EP est apte d'une part à communiquer avec un ou plusieurs terminaux via un lien radio et d'autre part, à communiquer avec le serveur réseau ou d'autres équipements du réseau via une liaison de communication L.

La liaison de communication L est par exemple une liaison filaire ou cellulaire.

Aucune limitation n'est apportée ni au type de la liaison LS ni au type de la liaison L.

L'équipement passerelle EP est notamment apte à communiquer avec le dispositif de transmission P via un lien radio L2.

De façon connue, le serveur de réseau SR est chargé de filtrer et de contrôler l'intégrité et l'authenticité des messages reçus via la liaison L avant de les transmettre aux serveurs applicatifs concernés.

Le serveur de réseau SR a également accès à une mémoire ML contenant une liste LT des terminaux connectés. La liste LT comprend notamment pour chaque terminal connecté, un identifiant dudit terminal en association avec des informations relatives à la session de communication établie pour ce terminal. Ces informations sont par exemple un identifiant du serveur applicatif avec lequel il est connecté, une clé de session, l'adresse attribuée au terminal connecté ...

Les informations contenues dans la liste LT permettent au serveur de réseau SR d'effectuer des contrôles d'intégrité avant de transmettre ou non un message reçu.

Les informations enregistrées pour un terminal connecté sont par exemple retirées de la liste LT en fin de session de communication.

Les données échangées entre les différents serveurs SR, SA et SG du réseau R sont indifféremment chiffrées avec des clés partagées ou des paires de clés privées-publiques ou tout autre procédé de chiffrement ou transmises en clair. Aucune limitation n'est apportée à la façon dont ces données sont échangées.

Le terminal C est configuré pour communiquer avec le serveur applicatif SA via le serveur de réseau SR, et via éventuellement des passerelles ou stations de base.

Plus précisément, le terminal C est configuré pour émettre et à recevoir des données via un lien radio.

Le terminal C est par exemple un compteur d'eau.

Le serveur applicatif SA est par exemple un serveur d'un fournisseur d'eau apte à traiter les données remontées par le compteur d'eau C et à fournir un service applicatif. Ce service applicatif est par exemple l'élaboration d'une facture à partir des données remontées, et la fourniture de cette facture à un utilisateur associé au compteur C. L'utilisateur peut par ailleurs se voir fournir un historique détaillé de ses consommations sur un portail web du fournisseur d'eau...

Le terminal C est configuré pour communiquer avec le serveur applicatif SA via le serveur de réseau SR, et via éventuellement des passerelles ou stations de base.

Cela signifie que lorsqu'il est installé dans une zone de couverture radio de l'équipement passerelle EP, il peut communiquer avec le serveur applicatif SA via une liaison radio entre le terminal et l'équipement passerelle EP, via l'équipement passerelle EP, la liaison L, le serveur réseau SR et la liaison LS.

A cet effet, le terminal C comporte une mémoire MC dans laquelle ont été enregistrés lors d'une phase préalable d'initialisation, par exemple lors de son installation, un identifiant IdC du terminal C, un identifiant IdS du serveur applicatif SA associé au terminal C et une clé cryptographique principale (ou maîtresse) KP1. La clé principale KP1 est par exemple stockée dans une mémoire sécurisée du terminal C.

La clé principale KP1 est également stockée dans une mémoire sécurisée du serveur applicatif SA, par exemple en association avec l'identifiant IdC du terminal C.

Il est supposé ici que le terminal C est installé dans une zone, appelée zone blanche, où il n'accède directement ni à un serveur du réseau, ni à un équipement passerelle. Plus précisément, les signaux radio émis par le terminal C ne parviennent pas jusqu'à un équipement passerelle EP du réseau.

Le terminal C est par exemple situé en sous-sol, par exemple dans une cave d'un immeuble, dans un bâtiment en tôle...

Le dispositif de transmission P, conforme à l'invention, est configuré pour communiquer avec le serveur de gestion SG via le serveur de réseau SR, et via l'équipement passerelle EP.

Le dispositif de transmission P est configuré pour communiquer avec l'équipement passerelle EP via un lien radio L2.

Le dispositif de transmission P est également apte à recevoir les signaux radio émis par le terminal C et à émettre des signaux radio. Le terminal C et le dispositif de transmission P communiquent ainsi via une liaison radio L1.

Dans le mode de réalisation décrit, les liaisons radio L1 et L2 sont des liens selon la technologie bas débit et basse consommation LoRa. Les signaux radio émis et reçus sont des signaux bas débit (inférieurs à 50Kbits/s) de longue portée (ie de type Long range).

A titre d'alternative, les liaisons L1 et L2 sont de liaisons radio de type différent.

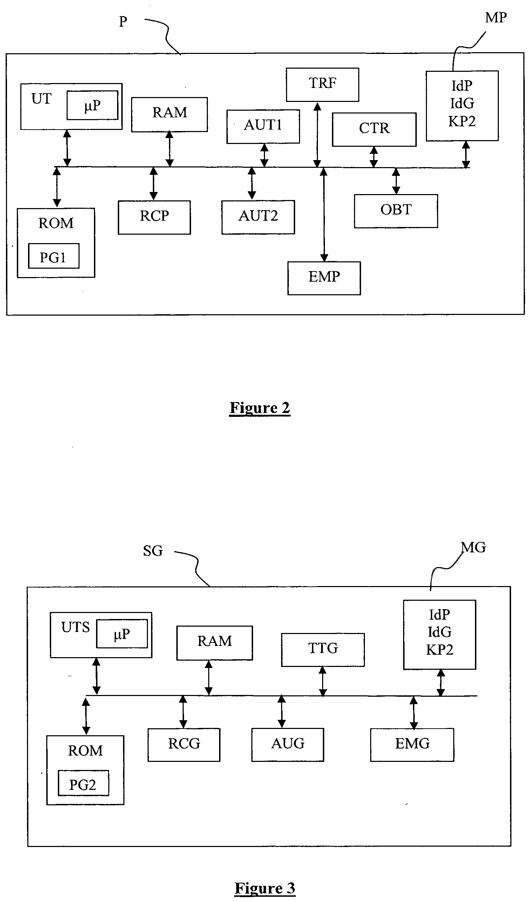

Comme illustré sur la **figure 2**, le dispositif de transmission P comporte de façon connue, notamment une unité de traitement UT équipée d'un microprocesseur, une mémoire morte de type ROM, une mémoire vive de type RAM.

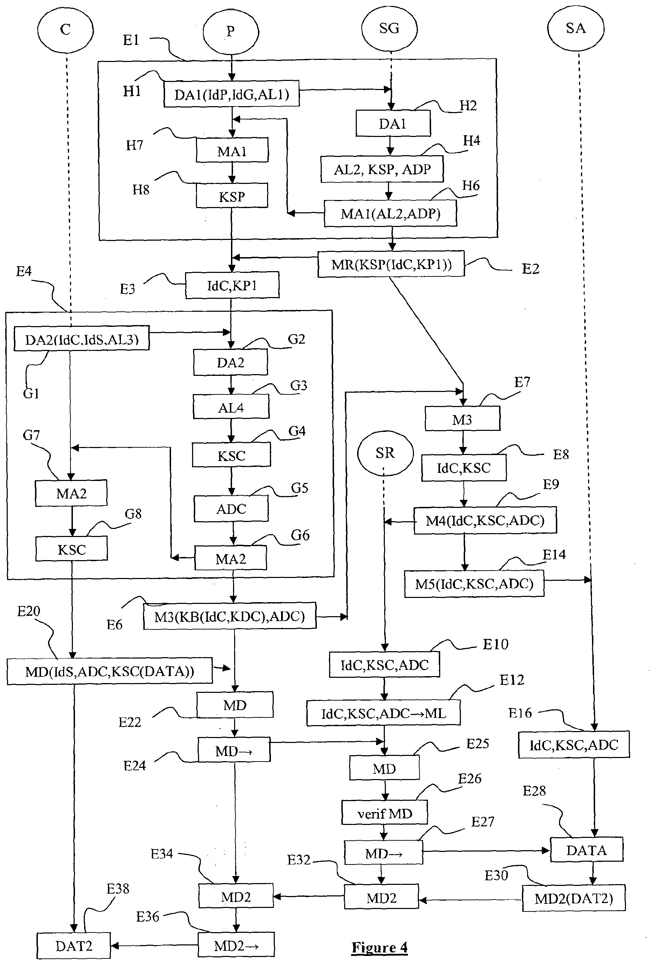

La mémoire morte de type ROM comporte des registres mémorisant un programme d'ordinateur PG1 comportant des instructions de programme adaptées à mettre en œuvre un procédé de transmission selon un mode de réalisation de l'invention décrit ultérieurement en référence à la figure 4.

Le dispositif de transmission P comporte également une mémoire MP, par exemple une mémoire sécurisée, dans laquelle ont été enregistrés lors d'une phase préalable d'initialisation, par exemple lors de son installation, un identifiant IdP du dispositif de transmission P, un identifiant IdG du serveur de gestion SG associé au dispositif de transmission P et une clé cryptographique principale (ou maîtresse) KP2. La clé principale KP2 représente une deuxième clé principale au sens de l'invention.

Le dispositif de transmission P comporte également un module d'obtention OBT, un module de réception RCP, un premier module de d'authentification AUT1, un deuxième module d'authentification AUT2, un module de contrôle CTR, un module d'émission EMP et un deuxième module de transfert TRF.

Le module de réception RCP est configuré pour recevoir d'une part des signaux radios émis via la liaison L1, typiquement par le terminal C et d'autre part des signaux radios émis via la liaison L2, typiquement par l'équipement passerelle EP.

Le module d'émission EMP et le module de transfert TRF sont configurés pour émettre des signaux radio.

Comme illustré sur la **figure 3****,** le serveur de gestion SG comporte de façon connue, notamment une unité de traitement UTS équipée d'un microprocesseur, une mémoire morte de type ROM, une mémoire vive de type RAM.

La mémoire morte de type ROM comporte des registres mémorisant un programme d'ordinateur PG2 comportant des instructions de programme adaptées à mettre en œuvre un procédé de gestion selon un mode de réalisation de l'invention décrit ultérieurement en référence à la figure 4.

Le serveur SG comporte également une mémoire MG, par exemple une mémoire sécurisée, dans laquelle ont été enregistrés lors d'une phase préalable, un identifiant IdG du serveur de gestion SG, un identifiant IdP du dispositif de transmission P et la clé principale KP2.

La clé cryptographique principale (ou maîtresse) KP2 associée au serveur de gestion SG peut être enregistrée dans une mémoire du serveur de réseau SR en association avec l'identifiant IdG du serveur de gestion SG et avec l'identifiant IdP du dispositif de transmission P.

La clé principale KP2 est ainsi partagée entre le dispositif de transmission P et le serveur réseau SR

Le serveur de gestion SG comporte également un module de réception RCG, un module d'authentification AUG, un module de transmission EMG et un module de traitement TTG.

Un mode de réalisation d'un procédé de transmission et d'un procédé de gestion mis en œuvre dans le système SYS, va maintenant être décrit en référence à la **figure 4****.**

Lors d'une étape E1, le dispositif de transmission P et le serveur de gestion SG établissent une session de communication SC2 lors de laquelle ils s'authentifient mutuellement. Cette étape d'authentification comporte, dans le mode de réalisation décrit, des étapes H1 à H8.

Lors d'une étape H1, le premier module d'authentification AUT1 du dispositif de transmission P transmet au serveur de gestion SG via le serveur de réseau SR une requête de connexion DA1. La requête de connexion DA1 est émise par le dispositif de transmission P, via la liaison radio L2. Elle est relayée au serveur de réseau SR par l'équipement passerelle EP via la liaison L puis retransmise au serveur de gestion SG via la liaison LS.

La requête de connexion DA1 contient l'identifiant IdP du dispositif de transmission P, l'identifiant IdG du serveur de gestion SG avec lequel le dispositif de transmission P demande à être connecté et une valeur aléatoire AL1 générée par le dispositif de transmission P.

La requête de connexion DA1 est par exemple un message JoinRequest défini dans le standard LoRaWAN™.

La requête de connexion DA1 est reçue par le module de réception RCG du serveur de gestion SG lors d'une étape H2.

Lors d'une étape H4, suite à la réception de la requête DA1, le module d'authentification AUG du serveur de gestion SG génère une valeur aléatoire AL2. Puis, il génère une clé de session KSP par application d'une fonction mathématique prédéfinie F1 en utilisant les paramètres suivants : la clé principale KP2, la valeur aléatoire AL1 reçue, la valeur aléatoire AL2.

La génération d'une clé de session, appelée également clé dérivée, à partir d'une clé principale (ou maîtresse) est une technique connue de l'homme du métier et ne sera pas décrite ici.

La fonction F1 est par exemple une fonction AES (pour « Advanced Encryption Standard »). Aucune limitation n'est apportée à la fonction F1.

Lors de l'étape H4, le module d'authentification AUG du serveur de gestion SG génère également une adresse ADP pour le dispositif de transmission P.

Puis, lors d'une étape H6, le module d'authentification AUG du serveur de gestion SG génère et émet, en réponse à la demande d'authentification DA1, un message MA1 d'acceptation de la connexion. Le message MA1 contient notamment la valeur aléatoire AL2 et l'adresse ADP générée. Il peut également contenir des paramètres de connexion.

Le message MA1 est par exemple un message JoinAccept défini dans le standard LoRaWAN™.

Des informations relatives à la connexion, c'est-à-dire à la session établie sont enregistrées par le serveur de réseau SR ou par le serveur de gestion SG dans la liste LT de la mémoire ML. Ces informations sont par exemple l'identifiant IdC du terminal C, l'identifiant IdG du serveur de gestion SG et la clé de session KSP.

Le message MA1 est reçu par le module de réception RCP du dispositif de transmission P lors d'une étape H7.

L'étape H7 est suivie d'une étape H8 lors de laquelle le premier module d'authentification AUT1 du dispositif de transmission P génère à son tour la clé de session KSP. La clé de session KSP est générée par application de la fonction F1 à la clé principale KP2 stockée dans la mémoire MP du dispositif de transmission P, de la première valeur aléatoire AL1 générée par le dispositif de transmission P et de la deuxième valeur aléatoire AL2 reçue dans le message MA1. La génération de la clé KSP par le dispositif de transmission P est similaire à celle décrite en relation avec l'étape H4.

Dans le mode de réalisation décrit, l'établissement de session comporte une authentification mutuelle de dispositif de transmission P et du serveur de gestion SG.

A titre d'alternative, la clé de session KSP par exemple générée par un dispositif de sécurité (non représenté) et préalablement enregistrée d'une part dans le dispositif de transmission P et d'autre part, dans le serveur de gestion SG et/ou le serveur de réseau SR.

Ainsi suite à l'étape E1, le dispositif de transmission P d'une part et le serveur de gestion SG possèdent la même clé de session KSP. En d'autres termes, la clé de session KSP est partagée par le dispositif de transmission P et le serveur de gestion SG.

L'étape E1 est suivie d'une étape E2 lors de laquelle le module de traitement TTG du serveur de gestion SG génère et envoie un message MR destiné au dispositif de transmission P. Le message MR contient l'identifiant IdC du terminal C et la clé principale KP1 associée à ce terminal.

Le message MR est transmis via le serveur réseau SR et l'équipement passerelle EP.

Les données du message MR sont chiffrées avec la clé de session KSP par le serveur de gestion SG ou par le serveur réseau SR.

Le message MR est par exemple transmis en réponse à un message d'interrogation émis par le dispositif de transmission P.

Lors d'une étape E3, suite à la réception du message MR, le module d'obtention OBT du dispositif de transmission P obtient, à l'aide de la clé de session KSP précédemment calculée, les données contenues dans le message MR, notamment l'identifiant IdC et la clé principale KP1. Puis, il enregistre ces données dans une mémoire du dispositif de transmission DP, par exemple la mémoire MP.

A titre d'alternative, l'identifiant IdC et la clé principale KP1 associée sont enregistrés dans le dispositif de transmission P lors d'une phase d'initialisation préalable à l'authentification. Il n'est alors pas nécessaire pour le dispositif de gestion SG de transmettre ces données.

La clé principale KP1 représente des premières données d'authentification au sens de l'invention.

Comme décrit ultérieurement, les premières données d'authentification peuvent également comprendre une valeur aléatoire et/ ou une adresse à attribuer au dispositif de transmission P.

Egalement, à titre d'alternative, les premières données d'authentification ne comprennent pas la clé principale KP1. Dans cette variante, les données générées à partir de la clé principale KP1 sont générées par le serveur de gestion SG ou par le serveur de réseau SR et transmises au dispositif de transmission P, via la session de communication établie entre le dispositif de transmission P et le serveur de gestion SG.

Lors d'une étape E4, le terminal C et le dispositif de transmission P établissement une session de communication SC1 lors de laquelle ils s'authentifient mutuellement. Cette étape d'établissement de session de communication E4 comporte dans le mode de réalisation décrit, des étapes G1 à G8.

Lors de l'étape G1, le terminal C émet une requête de connexion DA2.

La requête de connexion DA2 contient l'identifiant IdC du terminal C, l'identifiant IdS du serveur applicatif SA et une valeur aléatoire AL3 générée par le terminal C.

La valeur aléatoire AL3 représente des deuxièmes données d'authentification au sens de l'invention.

La requête de connexion DA2 est par exemple un message JoinRequest défini dans le standard LoRaWAN™.

Lors de l'étape G1, un code d'intégrité calculé à partir de la clé principale KP1 peut également être transmis au dispositif de transmission P. De façon connue, ce code d'intégrité permet au dispositif de transmission P d'authentifier le terminal C.

La requête de connexion DA2 est reçue par le module de réception RCP du dispositif de transmission P lors d'une étape G2.

Lors d'une étape G3, le deuxième module d'authentification AUT2 du dispositif de transmission P génère une valeur aléatoire AL4.

A titre d'alternative, la valeur aléatoire AL4 est générée par le serveur de gestion SG et transmise par celui-ci au dispositif de transmission P, par exemple lors de l'étape E2 précédemment décrite.

Dans le cas où un code d'intégrité est transmis par le terminal C lors de l'étape G1, le dispositif peut procéder à la vérification de ce code à l'aide de la clé principale KP1 qu'il détient. Dans le cas où il est déterminé par le dispositif de transmission P que ce code n'est pas valide, la session de communication entre le terminal C et le dispositif de transmission P n'est pas établie et le processus s'arrête.

De même, dans le cas où l'identifiant de terminal contenu dans la requête de connexion DA2 n'est pas connu du dispositif de transmission P, le dispositif de transmission P refuse d'établir la session de communication entre le terminal C et le dispositif de transmission P.

Lors d'une étape G4, le deuxième module d'authentification AUT2 du dispositif de transmission P génère une clé de session KSC par application d'une fonction mathématique prédéfinie F2 aux paramètres suivants : la clé principale KP1, la valeur aléatoire AL3 reçue, la valeur aléatoire AL4.

A titre d'alternative, la fonction F2 contient des paramètres supplémentaires.

La fonction mathématique F2 est par exemple identique à la fonction mathématique F1.

A titre d'alternative, les fonctions F1 et F2 sont deux fonctions mathématiques différentes.

Lors d'une étape G5, le deuxième module d'authentification AUT2 du dispositif de transmission P génère une adresse ADC pour le terminal C.

A titre d'alternative, l'adresse ADC du terminal C est générée par le serveur de gestion SG ou par le serveur réseau SR et transmise par celui-ci au dispositif de transmission P. Cette adresse ADC est alors par exemple transmise lors de l'étape E2 décrite précédemment.

Puis, lors d'une étape G6, le deuxième module d'authentification AUT2 du dispositif de transmission P émet, en réponse à la demande d'authentification DA2, un message d'acceptation de la connexion MA2. Le message MA2 contient notamment la valeur aléatoire AL4 et l'adresse ADC attribuée au terminal C. Il peut également contenir des paramètres de connexion.

Le message MA2 est par exemple un message JoinAccept défini dans le standard LoRaWAN™.

La valeur aléatoire AL4 et l'adresse ADC représentent des troisièmes données d'authentification au sens de l'invention.

Lors de l'étape G6, le dispositif de transmission P transmet également un code d'intégrité calculé à partir de la clé principale KP1. De façon connue, ce code d'intégrité permet au terminal C d'authentifier le dispositif de transmission P.

A titre d'alternative, ce code n'est pas transmis.

Le message MA2 est reçu par le terminal C lors d'une étape G7.

L'étape G7 est suivie d'une étape G8 lors de laquelle le module d'authentification AUC du terminal C génère à son tour la clé de session KSC. L'étape G8 est similaire à l'étape G4.

Ainsi suite à l'étape E4, le terminal C d'une part et le dispositif de transmission P possèdent la même clé de session KSC. En d'autres termes, la clé de session KSC est partagée par le terminal C et le dispositif de transmission P.

Lors d'une étape E6, le module d'émission EMP du dispositif de transmission P émet un message M3. Le message M3 contient l'identifiant IdC du terminal C, la clé de session KSC générée par le dispositif de transmission P et l'adresse ADC générée. Les données contenues dans le message M3 sont chiffrées avec la clé de session KSP partagée entre le dispositif de transmission P et le serveur de gestion SG.

Les données contenues dans le message M3 représentent des données DE d'établissement de session au sens de l'invention

En variante, le message M3 ne contient pas la clé KSC et le message M3 contient des données permettant au serveur de gestion SG ou au serveur réseau SR de générer cette clé, c'est-à-dire notamment la première valeur aléatoire AL3 et la deuxième valeur aléatoire AL4.

Dans un mode de réalisation particulier, le dispositif de transmission P commande l'effacement de la clé KSB précédemment générée, par exemple après envoi du message M3.

Les données DE d'établissement de session contenues dans le message M3 sont reçues par le module de réception RCG du serveur de gestion SG lors d'une étape E7.

L'étape E7 est suivie d'une étape E8 lors de laquelle le module de traitement TTG du serveur de gestion SG obtient la clé de session KSC et l'adresse ADC par déchiffrement des données du message M3 à l'aide de la clé KSP stockée dans une de ses mémoires.

A titre d'alternative, les données du message M3 sont déchiffrées par le serveur réseau SR et transmises ensuite au serveur de gestion SG.

Lors d'une étape E9, le module de traitement TTG du serveur de gestion SG commande l'enregistrement d'informations IS relatives à la session établie dans la liste LT de la mémoire ML. Pour cela, il transmet au serveur de réseau SR, un message M4 contenant l'identifiant IdC, la clé de session KSC et l'adresse ADC. Ces données sont par exemple transmises de façon sécurisée, par exemple en utilisant une clé partagée par le serveur de gestion SG et le serveur de réseau SR.

L'identifiant IdC du terminal C, la clé de session KSC et l'adresse ADC sont reçus par le serveur réseau SR lors d'une étape E10.

L'étape E10 est suivie d'une étape E12 lors de laquelle le serveur réseau SR enregistre des informations IS relatives à la session établie en association avec l'identifiant IdC du terminal C dans la mémoire ML. Les informations enregistrées sont par exemple l'identifiant IdS du serveur applicatif SA, la clé de session KSC et l'adresse ADC.

Lors d'une étape E14, le module de transmission EMG du serveur de gestion SG transmet au serveur applicatif SA, un message M5 contenant l'identifiant IdC, la clé de session KSC et l'adresse ADC. Ces données sont par exemple transmises de façon sécurisée. Ces données sont par exemple transmises en utilisant une clé partagée par le serveur de gestion SG et le serveur applicatif SA.

L'identifiant IdC du terminal C, la clé de session KSC et l'adresse ADC sont reçus par le serveur applicatif SA lors d'une étape E16.

Lors d'une étape E20, réalisée après les étapes décrites précédemment, le terminal C ayant des données DATA à transmettre au serveur applicatif SA, génère et émet un message MD.

Les données DATA sont par exemple des données de mesure obtenues par le terminal C.

Plus généralement, les données DATA sont des données que le terminal C souhaite transmettre au serveur applicatif SA et/ou au serveur de réseau SR.

Aucune limitation n'est apportée au type des données DATA du message de données MD.

Le message MD contient l'identifiant IdS du serveur applicatif SA, l'adresse ADC du terminal C ainsi que les données DATA chiffrées avec la clé de session générée KSC générée par le terminal C.

Le message MD est reçu par le module de réception RCP du dispositif de transmission P lors d'une étape E22.

Le module de contrôle CTR du dispositif de transmission P vérifie que le message MD provient du terminal C et est à destination du serveur applicatif SA (étape E24).

Si la vérification est positive, le module de contrôle CTR du dispositif de transmission P commande l'émission du message MD par le deuxième module de transmission EMP du dispositif de transmission P.

Le message de données MD émis par le terminal C, destiné au serveur applicatif SA et reçu par le dispositif de transmission P est ainsi réémis par ce dernier.

Si la vérification est négative, par exemple si le message MD reçu par le dispositif de transmission P est un message émis par un terminal pour lequel le dispositif de transmission P n'a pas reçu de droits, par exemple l'identifiant de terminal et des premières données d'authentification associées, ou si le message MD émis par le terminal C n'est pas émis à destination du serveur applicatif SA, le message n'est pas réémis par le dispositif de transmission P.

Le message MD, réémis par le dispositif de transmission P est reçu par le serveur de réseau SR lors d'une étape E25.

Lors d'une étape E26, le serveur de réseau SR vérifie que le terminal C est inscrit dans la mémoire ML contenant une liste d'identifiants de terminaux connectés en association avec des informations relatives aux sessions établies pour ces terminaux.

A l'aide des données IS enregistrées en association avec l'identifiant du terminal C dans la mémoire ML, le serveur de réseau SR peut également effectuer des contrôles d'intégrité du message MD.

Si le terminal n'est pas inscrit dans la mémoire ML ou si le serveur réseau SR considère que les contrôles ne sont pas satisfaisants, le message MD n'est pas transmis au serveur applicatif SA.

Sinon, le message MD est transmis par le serveur réseau SR au serveur applicatif SA lors d'une étape E27.

L'étape E27 est suivie d'une étape E28 lors de laquelle le serveur applicatif SA obtient les données DATA à l'aide de la clé de session KSC reçue lors de l'étape E16.

Dans le mode de réalisation décrit, lors de l'étape E24, le message MD est retransmis sans subir de traitement de la part du dispositif de transmission P.

A titre d'alternative, le message MD est chiffré avec la clé de session KSP par le dispositif de transmission P avant d'être transmis et transite via le serveur de gestion SG où il est déchiffré à l'aide de la clé de session KSP générée par le serveur de gestion SG puis transmis par le serveur de gestion SG au serveur applicatif SA.

Les étapes E20 à E28 peuvent être réitérées une ou plusieurs fois.

Une des étapes E28 peut être suivie d'une étape E30 lors de laquelle le serveur applicatif SA ayant des données DAT2 à transmettre au terminal C, génère et transmet un message MD2 à destination du terminal C.

Les données du message MD2 sont chiffrées avec la clé KSC.

L'étape E30 est par exemple réalisée suite à la réception par le serveur applicatif SA d'un message d'interrogation.

Lors d'une étape E32, similaire à l'étape E26, le message MD2 est reçu par le serveur de réseau SR qui vérifie le message MD2 et retransmets le message MD2 au dispositif de transmission P via l'équipement passerelle EP.

Le dispositif de transmission P, via le module de réception RCP, reçoit le message MD2 lors d'une étape E34.

Lors d'une étape E36, le module de transfert TRF du dispositif de transmission P réémet le message MD2 reçu et le message MD2 est reçu par le terminal C lors d'une étape E38.

Les étapes H1, H7, H8, E3, G2, G3, G4, G5, G6, E6, E22, E24, E34 et E36 mises en œuvre par le dispositif de transmission P représentent des étapes du procédé de communication selon un mode de réalisation de l'invention.

Les étapes H2, H4, H6, E2, E7, E8, E9 et E14 mises en œuvre par le serveur de gestion SG représentent des étapes du procédé de gestion selon un mode de réalisation de l'invention.

Dans le mode de réalisation décrit, la clé de session KSC générée par le dispositif de transmission DP est transmise par ce dispositif au serveur de gestion SG.

A titre d'alternative, la valeur aléatoire AL3 générée par le terminal C et la valeur aléatoire AL4 générée par le dispositif de transmission P sont transmises au serveur de gestion SG à la place de la clé de session KSC. La clé de session KSC n'est pas transmise. La clé de session KSC est alors générée par le serveur applicatif SA ou par le serveur réseau par application de la fonction mathématique F2 aux valeurs aléatoires AL3 et AL4 et à la clé principale KP1.

Dans un autre mode particulier de réalisation, la valeur aléatoire AL2 et l'adresse ADC du terminal sont générées par le serveur de gestion SG, par le serveur réseau SR ou par le serveur applicatif SA, puis transmises au dispositif de transmission P. La clé de session KSC peut ne pas être générée par le dispositif de transmission P. Dans ce cas, seule la valeur aléatoire AL3 générée par le terminal C est transmise en association avec l'identifiant IdC du terminal C lors de l'étape E6. La clé de session KSC est alors générée par le serveur applicatif SA par application de la fonction mathématique F2 aux valeurs aléatoires AL3 et AL4 et à la clé principale KP1.

Dans le mode de réalisation décrit, lors de l'établissement d'une session avec un serveur applicatif, par exemple le serveur de gestion SG ou le serveur applicatif SA, l'authentification d'un terminal ou d'un dispositif de transmission est réalisée par le serveur lui-même.

En variante, une telle authentification peut être réalisée par le serveur réseau ou un autre équipement du réseau, par exemple un serveur d'authentification du réseau. Dans cette variante, les données associées à un serveur applicatif et nécessaires pour la mise en œuvre de l'authentification sont mises à disposition du serveur de réseau.

Une clé secondaire générée à partir d'une clé principale peut être conservée par le serveur réseau qui authentifie et/ou déchiffre alors les messages provenant d'un terminal ou d'un dispositif de transmission avant de les transmettre, de préférence via une liaison sécurisée, au serveur applicatif concerné.

Inversement, les messages générés par un serveur applicatif sont signés et/ou chiffrés avec la clé secondaire par le serveur de réseau avant transmission à un terminal ou à un dispositif de transmission.

Une clé secondaire générée à partir d'une clé principale peut également être transmise au serveur applicatif qui peut alors se charge de chiffrer les messages avant transmission et déchiffrer les messages reçus.

Dans le mode de réalisation décrit, une clé de session est générée lors de chaque authentification mutuelle. Une clé de session KSP est générée lors de l'authentification mutuelle du dispositif de transmission P et du serveur de gestion SG et une clé de session KSC est générée lors de l'authentification mutuelle du terminal C et du dispositif de transmission P.

Au sens du standard LoRaWAN™, ces clés de session sont des clés de session applicatives.

Dans les architectures de type LoRaWAN™, la sécurité des échanges entre les terminaux et les serveurs d'application est assurée à deux niveaux distincts, i.e., au niveau réseau via divers contrôles d'intégrité réalisés par le serveur du réseau jouant les intermédiaires entre les terminaux et les serveurs d'application et par les terminaux eux-mêmes, et au niveau applicatif, via le chiffrement/déchiffrement des données applicatives échangées entre les terminaux et les serveurs d'application. Chacun de ces mécanismes s'appuie, lors de chaque session établie par un terminal avec un serveur d'application via le serveur du réseau, sur l'algorithme de chiffrement connu AES utilisé dans le protocole LoRaWAN™ paramétré tantôt au moyen de clés cryptographiques de session réseau, tantôt au moyen de clés cryptographiques de session applicatives. Ces clés cryptographiques sont ici de dimension 128 bits. On note toutefois que l'invention permet d'envisager aisément d'autres algorithmes de chiffrement symétriques que l'algorithme de chiffrement AES, ainsi que d'autres tailles de clés.

L'invention s'applique aussi à cette architecture.

Ainsi, dans une variante de réalisation, lors de l'authentification mutuelle requise par le dispositif de transmission P, la demande d'authentification DA1 émise par le dispositif de transmission P est interceptée par un serveur de réseau SR du réseau LoRa™.

Suite à la réception de la demande d'authentification DA1, le serveur de réseau SR génère d'une part une clé réseau KRP et d'autre part la clé de session KSP.

De même, le dispositif de transmission P génère également outre la clé de session KSP, la clé réseau KRP.

Les messages transmis par le dispositif de transmission P à destination du serveur de gestion SG contiennent des données chiffrées par la clé de session KSP puis signées par la clé réseau KRP. Chaque message est reçu par le serveur de réseau SR qui en vérifie l'intégrité et l'authenticité grâce à sa clé réseau KRP, et les transmet au serveur de gestion SG qui le déchiffre avec la clé de session KSP. A titre d'alternative, s'il a été mandaté pour ce faire, le serveur réseau SR peut déchiffrer le message avec la clé de session KSP et transmettre le message déchiffré au serveur de gestion SG via la liaison LS, de préférence sécurisée.

De même, lors de l'étape d'authentification mutuelle entre le terminal C et le dispositif de transmission DP, une clé réseau KRC peut être générée à partir de la clé principale KP1 d'une part par le terminal C et d'autre part par le dispositif de transmission P.

Les messages transmis par le terminal C lors de l'étape E20 sont alors également signés par la clé réseau KRC.

En variante de ce mode de réalisation, lors de la réception d'un message de données chiffré avec la clé de session KSC et signé avec la clé réseau KRC, en provenance du terminal C, le dispositif de transmission P obtient à l'aide de la clé réseau KRC, les données DATA chiffrées avec la clé de session KSC c'est-à-dire KSC(DATA). Il chiffre alors ces données chiffrées (KSC(DATA)) avec la clé de session KSP puis les signe avec la clé réseau KRP avant de transmettre le message ainsi obtenu.

Le message est obtenu par le serveur réseau SR qui obtient et transmet les données chiffrées avec la clé de session KSP au serveur de gestion SG. Ce message est reçu par le serveur de gestion SG qui obtient, à l'aide de sa clé KSP, les données chiffrées avec la clé KSC et transmet le message obtenu. Ce message est reçu enfin par le serveur applicatif SA qui obtient à l'aide de la clé KSC les données DATA.

## Revendications

1. Dispositif de transmission (P) apte à communiquer via une liaison radio avec un équipement passerelle (EP) formant nœud d'un réseau de télécommunication et configuré pour communiquer avec un serveur de gestion (SG) via ledit équipement passerelle (EP) et un serveur de réseau (SR) dudit réseau, comportant:
un module d'obtention (OBT) configuré pour obtenir des premières données d'authentification (KP1) associées à au moins un identifiant de terminal (IdC), un dit identifiant de terminal identifiant un terminal (C) configuré pour se connecter via ledit serveur de réseau (SR) à un serveur applicatif (SA) ;
un module d'authentification (AUT2) configuré pour établir une session de communication (SC1) entre ledit dispositif de transmission (P) et ledit terminal (C) à l'aide d'au moins une des premières données d'authentification obtenues ;
un module d'émission (EMP) configuré pour émettre des données d'établissement de ladite session (KSC, AL1, AL2, ADC), lesdites données étant destinées audit serveur de gestion (SG) ;
un module de réception (RCP) configuré pour recevoir un message de données (MD) émis par ledit terminal (C) et destiné audit serveur applicatif (SA) et pour recevoir un message de données (MD2) généré par le serveur applicatif (SA) ou le serveur de réseau (SR) et destiné au terminal (C) ; et
un module de transfert (TRF) configuré pour émettre ledit message de données (MD, MD2) reçu.

2. Procédé de transmission mis en œuvre par un dispositif de transmission (P) apte à communiquer via une liaison radio (L2) avec un équipement passerelle (EP) formant nœud d'un réseau de télécommunication, ledit dispositif de transmission (P) étant configuré pour communiquer avec un serveur de gestion (SG) via ledit équipement passerelle (EP) et un serveur réseau (SR) dudit réseau, comportant les étapes suivantes :
obtention (E3) des premières données d'authentification (KP1) associées à au moins un identifiant de terminal (IdC), un dit identifiant de terminal identifiant un terminal (C) configuré pour se connecter à un serveur applicatif (SA) via ledit serveur de réseau (SR) ;
établissement (E4) d'une session de communication (SC1) entre le dispositif de transmission et le terminal à l'aide d'au moins une des premières données d'authentification obtenues ;
émission (E6) de données d'établissement de ladite session (KSC, AL1, AL2, ADC), lesdites données étant destinées audit serveur de gestion (SG) ;
réception (E22, E34) d'un message de données (MD) émis par le terminal et destiné audit serveur applicatif et/ou d'un message de données (MD2) généré par le serveur applicatif (SA) ou le serveur de réseau et destiné au terminal ;
émission (E24, E34) dudit message de données reçu.

3. Procédé de communication selon la revendication 2 dans lequel l'étape d'obtention est une étape de réception des premières données d'authentification, lesdites premières données étant transmises par le serveur de gestion.

4. Procédé de communication selon l'une des revendications 2 ou 3 dans lequel les premières données d'authentification sont obtenues en réponse à un message émise par ledit dispositif de transmission.

5. Procédé de communication selon l'une des revendications 2 à 4 dans lequel l'étape d'établissement de ladite session comporte :
une étape de réception d'une requête de connexion (DA2) audit serveur applicatif émise par ledit terminal, ladite requête contenant des deuxièmes données d'authentification (AL3);
une étape d'émission, en réponse à la dite requête de connexion, d'un message d'acceptation de connexion audit serveur applicatif comprenant des troisièmes données d'authentification (AL2, ADC), lesdites troisièmes données comprenant au moins une des premières données d'authentification et/ou des données générées par le dispositif de transmission.

6. Procédé de communication selon la revendication 5 dans lequel les premières données d'authentification comportent une clé principale, les deuxièmes données d'authentification comportent une première valeur aléatoire et les troisièmes données comportent une deuxième valeur aléatoire et dans lequel le procédé comporte une étape de génération d'une clé secondaire par application d'une fonction prédéfinie à ladite clé principale, à la première valeur aléatoire et à la deuxième valeur aléatoire.

7. Procédé de communication selon la revendication 6 dans lequel les données d'établissement de session transmises comportent ladite clé secondaire.

8. Procédé de communication selon l'une des revendications 6 ou 7 dans lequel la deuxième valeur aléatoire est générée par le dispositif de transmission.

9. Procédé de communication selon l'une des revendications 6 à 8 dans lequel les troisièmes données comportent une adresse du terminal (C) générée ou reçue par le dispositif de transmission.

10. Programme d'ordinateur comprenant des instructions de code de programme pour l'exécution des étapes d'un procédé de transmission selon l'une des revendications 2 à 9, lorsque ledit programme est exécuté sur un ordinateur.

11. Support d'enregistrement lisible par ordinateur sur lequel est enregistré un programme d'ordinateur comportant des instructions de code de programme pour l'exécution des étapes d'un procédé de transmission selon l'une des revendications 2 à 9.

## Patentansprüche

1. Übertragungsvorrichtung (P), die dazu geeignet ist, über eine Funkverbindung mit einer Gateway-Einrichtung (EP) zu kommunizieren, die einen Knoten eines Telekommunikationsnetzes bildet, und dazu konfiguriert ist, mit einem Verwaltungsserver (SG) über die Gateway-Einrichtung (EP) und einen Netzserver (SR) des Netzes zu kommunizieren, umfassend:
ein Erhaltmodul (OBT), das dazu konfiguriert ist, erste Authentifizierungsdaten (KP1) zu erhalten, die mindestens einer Endgerätekennung (IdC) zugeordnet sind, wobei eine Endgerätekennung ein Endgerät (C) kennzeichnet, das dazu konfiguriert ist, sich über den Netzserver (SR) mit einem Anwendungsserver (SA) zu verbinden;
ein Authentifizierungsmodul (AUT2), das dazu konfiguriert ist, eine Kommunikationssitzung (SC1) zwischen der Übertragungsvorrichtung (P) und dem Endgerät (C) mithilfe mindestens eines der erhaltenen ersten Authentifizierungsdaten aufzubauen;
ein Sendemodul (EMP), das dazu konfiguriert ist, Daten über den Aufbau der Sitzung (KSC, AL1, AL2, ADC) zu senden, wobei die Daten für den Verwaltungsserver (SG) bestimmt sind;
ein Empfangsmodul (RCP), das dazu konfiguriert ist, eine Datennachricht (MD) zu empfangen, die vom Endgerät (C) gesendet wird und für den Anwendungsserver (SA) bestimmt ist, und eine Datennachricht (MD2) zu empfangen, die vom Anwendungsserver (SA) oder dem Netzserver (SR) erzeugt wird und für das Endgerät (C) bestimmt ist; und
ein Transfermodul (TRF), das dazu konfiguriert ist, die empfangene Datennachricht (MD, MD2) zu senden.

2. Übertragungsverfahren, das durch eine Übertragungsvorrichtung (P) umgesetzt wird, die dazu geeignet ist, über eine Funkverbindung (L2) mit einer Gateway-Einrichtung (EP) zu kommunizieren, die einen Knoten eines Telekommunikationsnetzes bildet, wobei die Übertragungsvorrichtung (P) dazu konfiguriert ist, mit einem Verwaltungsserver (SG) über die Gateway-Einrichtung (EP) und einen Netzserver (SR) des Netzes zu kommunizieren, umfassend die folgenden Schritte:
Erhalten (E3) der ersten Authentifizierungsdaten (KP1), die zu mindestens einer Endgerätekennung (IdC) gehören, wobei eine Endgerätekennung ein Endgerät (C) kennzeichnet, das dazu konfiguriert ist, sich über den Netzserver (SR) mit einem Anwendungsserver (SA) zu verbinden;
Aufbauen (E4) einer Kommunikationssitzung (SC1) zwischen der Übertragungsvorrichtung und dem Endgerät mithilfe mindestens eines der erhaltenen ersten Authentifizierungsdaten;
Senden (E6) von Daten über den Aufbau der Sitzung (KSC, AL1, AL2, ADC), wobei die Daten für den Verwaltungsserver (SG) bestimmt sind;
Empfangen (E22, E34) einer Datennachricht (MD), die vom Endgerät gesendet wird und für den Anwendungsserver bestimmt ist, und/oder einer Datennachricht (MD2), die vom Anwendungsserver (SA) oder dem Netzserver erzeugt wird und für das Endgerät bestimmt ist; und
Senden (E24, E34) der empfangenen Datennachricht.

3. Kommunikationsverfahren nach Anspruch 2, wobei der Schritt des Erhaltens ein Schritt des Empfangens der ersten Authentifizierungsdaten ist, wobei die ersten Daten vom Verwaltungsserver übertragen werden.

4. Kommunikationsverfahren nach einem der Ansprüche 2 oder 3, wobei die ersten Authentifizierungsdaten als Antwort auf eine Meldung erhalten werden, die von der Übertragungsvorrichtung gesendet wird.

5. Kommunikationsverfahren nach einem der Ansprüche 2 bis 4, wobei der Schritt des Aufbauens der Sitzung umfasst:
einen Schritt des Empfangens einer vom Endgerät gesendeten Verbindungsanforderung (DA2) durch den Anwendungsserver, wobei die Anforderung zweite Authentifizierungsdaten (AL3) enthält;
einen Schritt des Sendens einer Nachricht der Verbindungsannahme als Antwort auf die Verbindungsanforderung an den Anwendungsserver, umfassend dritte Authentifizierungsdaten (AL2, ACD), wobei die dritten Daten mindestens eines der ersten Authentifizierungsdaten und/oder der von der Übertragungseinrichtung erzeugten Daten umfassen.

6. Kommunikationsverfahren nach Anspruch 5, wobei die ersten Authentifizierungsdaten einen Hauptschlüssel umfassen, die zweiten Authentifizierungsdaten einen zufälligen ersten Wert umfassen und die dritten Daten einen zweiten zufälligen Wert umfassen und wobei das Verfahren einen Schritt des Erzeugens eines sekundären Schlüssels durch Anwendung einer vordefinierten Funktion auf den Hauptschlüssel, auf den ersten zufälligen Wert und auf den zweiten zufälligen Wert umfasst.

7. Kommunikationsverfahren nach Anspruch 6, wobei die übertragenen Daten über den Sitzungsaufbau den sekundären Schlüssel umfassen.

8. Kommunikationsverfahren nach einem der Ansprüche 6 oder 7, wobei der zweite zufällige Wert von der Übertragungsvorrichtung erzeugt wird.

9. Kommunikationsverfahren nach einem der Ansprüche 6 bis 8, wobei die dritten Daten eine Adresse des Endgeräts (C) umfassen, die von der Übertragungsvorrichtung erzeugt oder empfangen wird.

10. Computerprogramm, umfassend Programmcodeanweisungen zur Ausführung der Schritte eines Übertragungsverfahrens nach einem der Ansprüche 2 bis 9, wenn das Programm auf einem Computer ausgeführt wird.

11. Computerlesbares Speichermedium, auf dem ein Computerprogramm gespeichert ist, umfassend Programmcodeanweisungen zur Ausführung der Schritte eines Übertragungsverfahrens nach einem der Ansprüche 2 bis 9.

## Claims

1. Transmission device (P) able to communicate via a radio link with a gateway equipment (EP) forming a node of a telecommunications network and configured so as to communicate with a management server (SG) via said gateway equipment (EP) and a network server (SR) of said network, comprising:
- an obtainment module (OBT) configured so as to obtain first authentication data (KP1) associated with at least one terminal identifier (IdC), a said terminal identifier identifying a terminal (C) configured so as to connect to an application server (SA) via said network server (SR);
- an authentication module (AUT2) configured so as to establish a communication session (SC1) between said transmission device (P) and said terminal (C) using at least one of the first items of authentication data that are obtained;
- a sending module (EMP) configured so as to send establishment data for said session (KSC, AL1, AL2, ADC), said data being intended for said management server (SG);
- a reception module (RCP) configured so as to receive a data message (MD) sent by said terminal (C) and intended for said application server (SA) and to receive a data message (MD2) generated by the application server (SA) or the network server (SR) and intended for the terminal (C); and
- a transfer module (TRF) configured so as to send said received data message (MD, MD2).

2. Transmission method implemented by a transmission device (P) able to communicate via a radio link (L2) with a gateway equipment (EP) forming a node of a telecommunications network, said transmission device (P) being configured so as to communicate with a management server (SG) via said gateway equipment (EP) and a network server (SR) of said network, comprising the following steps:
- obtaining (E3) first authentication data (KP1) associated with at least one terminal identifier (IdC), a said terminal identifier identifying a terminal (C) configured so as to connect to an application server (SA) via said network server (SR) ;
- establishing (E4) a communication session (SC1) between the transmission device and the terminal using at least one of the first items of authentication data that are obtained;
- sending (E6) establishment data for said session (KSC, AL1, AL2, ADC), said data being intended for said management server (SG);
- receiving (E22, E34) a data message (MD) sent by the terminal and intended for said application server and/or a data message (MD2) generated by the application server (SA) or the network server and intended for the terminal;
- sending (E24, E34) said received data message.

3. Communication method according to Claim 2, wherein the obtainment step is a step of receiving the first authentication data, said first data being transmitted by the management server.

4. Communication method according to either of Claims 2 and 3, wherein the first authentication data are obtained in response to a message sent by said transmission device.

5. Communication method according to one of Claims 2 to 4, wherein the step of establishing said session comprises:
- a step of receiving a request (DA2) to connect to said application server sent by said terminal, said request containing second authentication data (AL3);
- a step of sending, in response to said connection request, a message accepting connection to said application server comprising third authentication data (AL2, ADC), said third data comprising at least one of the first items of authentication data and/or data generated by the transmission device.

6. Communication method according to Claim 5, wherein the first authentication data comprise a primary key, the second authentication data comprise a first random value and the third data comprise a second random value, and wherein the method comprises a step of generating a secondary key by applying a predefined function to said primary key, to the first random value and to the second random value.

7. Communication method according to Claim 6, wherein the transmitted session establishment data comprise said secondary key.

8. Communication method according to either of Claims 6 and 7, wherein the second random value is generated by the transmission device.

9. Communication method according to one of Claims 6 to 8, wherein the third data comprise an address of the terminal (C) generated or received by the transmission device.

10. Computer program comprising program code instructions for executing the steps of a transmission method according to one of Claims 2 to 9 when said program is executed on a computer.

11. Computer-readable recording medium on which there is recorded a computer program containing program code instructions for executing the steps of a transmission method according to one of Claims 2 to 9.
